# EUROPÄISCHE PATENTANMELDUNG

(11) **EP 4 817 860 A1**
(43) Veröffentlichungstag der Anmeldung: **07.10.2026**
(21) Anmeldenummer: 25167399.2
(22) Anmeldetag: 31.03.2025
(51) Int. Cl.: B32B 3/06, B32B 7/03, B32B 13/02, B32B 13/04, B32B 13/12, B32B 13/14, E04C 2/06, E04C 5/07

(54) **BETONFERTIGTEIL ZUR AUFNAHME VON LASTEN SOWIE VERFAHREN ZUR HERSTELLUNG EINES BETONFERTIGTEILS**

(71) Anmelder: Confinity GmbH und Co. KG, 89077 Ulm (DE)
(72) Erfinder: WEIGAND, Patrick, 97072 Würzburg (DE); OBERNDORFER, Thomas, 33335 Gütersloh (DE); REMITZ, Jörn, 33813 Oerlinghausen (DE); NEUMANN, Thomas, 97753 Karlstadt (DE)
(74) Vertreter: Cohausz & Florack

(57) **Zusammenfassung**

Die Erfindung betrifft ein Betonfertigteil, insbesondere zur Verwendung als Strukturbauteil, zur Aufnahme von Lasten, umfassend: eine erste Schicht (4); und zumindest eine weitere Schicht (6); wobei die erste Schicht (4) und die zumindest eine weitere Schicht (6) faserverstärkten Beton umfassen. Die Erfindung betrifft ebenfalls ein Verfahren zur Herstellung eines Betonfertigteils

## Beschreibung

Die Erfindung betrifft ein Betonfertigteil, insbesondere zur Verwendung als Strukturbauteil, zur Aufnahme von Lasten, umfassend: eine erste Schicht; und zumindest eine weitere Schicht; wobei die erste Schicht und die zumindest eine weitere Schicht faserverstärkten Beton umfassen. Die Erfindung betrifft ebenfalls ein Verfahren zur Herstellung eines Betonfertigteils, insbesondere eines vorgenannten Betonfertigteils.

Betonfertigteile werden in der Bauindustrie seit Jahrzehnten erfolgreich eingesetzt, um tragende und nicht tragende Strukturen wirtschaftlich und effizient zu errichten. Sie finden Anwendung in Bereichen wie Brückenbau, Gebäudekonstruktionen und Verkehrsinfrastrukturen, wo hohe Belastbarkeit und lange Lebensdauer gefordert sind. Betonfertigteile, welche tragende Strukturen abbilden, werden auch als Strukturbauteile bezeichnet.

Zur Verbesserung der Materialeigenschaften von Beton, insbesondere der Zugfestigkeit und Rissbeständigkeit, werden zunehmend faserverstärkte Betone (FRC, Fiber Reinforced Concrete) eingesetzt. Durch die Einmischung von Fasern, beispielsweise aus Stahl, Carbon/Kohlenstoff, Kunststoff und/oder Glas, kann die Bildung und Ausbreitung von Rissen reduziert und die mechanischen Eigenschaften des Materials verbessert werden.

Jedoch weisen herkömmliche faserverstärkte Betonfertigteile gewisse Einschränkungen auf. Ein wesentliches Problem besteht darin, dass für die gewünschte Festigkeit und Belastbarkeit eine Mindestdicke des Betonfertigteils erforderlich ist. Dies ist beispielsweise darauf zurückzuführen, dass die Fasern in einer ausreichenden Dichte im Beton eingebettet sein müssen, um die angestrebten mechanischen Eigenschaften zu erzielen. Eine Unterschreitung dieser Mindestdicke kann zu einer unzureichenden Lastübertragung zwischen den Fasern und der Betonmatrix führen, was wiederum die strukturelle Integrität des Bauteils beeinträchtigen kann.

Dies stellt insbesondere bei der Entwicklung von leichten und schlanken Betonfertigteilen eine Herausforderung dar. Zudem führt die notwendige Mindestdicke oft zu einem erhöhten Materialverbrauch und einer erschwerten Handhabung der Betonfertigteile, was sowohl die Herstellungskosten als auch die Transport- und Einbauaufwendungen erhöhen kann.

Ein weiterer Nachteil herkömmlicher Lösungen liegt darin, dass die Eigenschaften von faserverstärktem Beton nicht immer gleichmäßig über die gesamte Bauteildicke und Bauteillänge hinweg optimiert werden können. Dies kann insbesondere bei Belastungen, die unterschiedliche Spannungsverteilungen über die Querschnittshöhe erzeugen, wie etwa Biege- oder Schubbelastungen, zu einer ineffizienten Nutzung des Materials führen.

Davon ausgehend hat sich der vorliegenden Erfindung die Aufgabe gestellt, ein Betonfertigteil anzugeben, welches in kostengünstiger Weise gefertigt werden kann und zudem die geforderten Festigkeitseigenschaften aufweist. Ebenfalls soll ein Verfahren zur Herstellung eines Betonfertigteils angegeben werden, mittels welchem in kostengünstiger Weise Betonfertigteile mit den geforderten Festigkeitseigenschaften produziert werden können.

Gemäß einem ersten Aspekt wird die vorgenannte Aufgabe dadurch gelöst, dass die erste Schicht und die zumindest eine weitere Schicht einander zugewandte und zueinander korrespondierende Oberflächen aufweisen.

Hierdurch kann ein mehrschichtiges Betonfertigteil zur Verfügung gestellt werden, welches aufgrund der einander zugewandten und zueinander korrespondierenden Oberflächen von benachbarten Schichten eine verbesserte Lastübertragung zwischen den Schichten ermöglichen.

Beispielsweise kann die Kontaktfläche zwischen der ersten Schicht und der zumindest einen weiteren Schicht durch die zueinander korrespondierenden Oberflächen erhöht werden, wodurch Lasen und Kräfte gleichmäßiger übertragen werden können.

Ebenfalls kann beispielsweise das Risiko einer Verschiebung bzw. einer Delamination der ersten Schicht zu bzw. von der zumindest einen weiteren Schicht durch einen zumindest teilweisen Formschluss zwischen der ersten Schicht und der zumindest einen weiteren Schicht reduziert werden.

Vorzugsweise kann zudem eine verbesserte Verbundwirkung zwischen der ersten Schicht und der zumindest einen weiteren Schicht erzielt werden, wodurch die erste Schicht und die zumindest eine weitere Schicht mehr als einheitliches Gesamtsystem arbeiten, wodurch die mechanischen Eigenschaften, insbesondere die Zug-, Druck- und Biegefestigkeit, des Betonfertigteils verbessert werden können.

Insbesondere kann ein vorgenanntes Betonfertigteil ein im Wesentlichen monolthisches Tragverhalten aufweisen, wobei insbesondere bei einer Rissbildung keine für das Auge sichtbaren Risse entstehen. Insbesondere kann durch das vorgenannte Betonfertigteil eine hohe Verformungsstabilität und hohe Dichtheit gegenüber Gasen und Flüssigkeiten ermöglicht werden.

Als Beton ist insbesondere ein Baustoff zu verstehen, der als Dispersion unter Zugabe von Flüssigkeit aus einem Bindemittel und Zuschlagstoffen angemischt werden kann. Beispielsweise kann als Bindemittel Zement und als Zuschlagsstoff Sand, Kies und/oder Split verwendet werden. Beispielsweise ist es bevorzugt, dass die Zuschlagsstoffe ein Größtkorn von höchstens 8 mm, insbesondere ein Größtkorn von höchstens 4 mm aufweisen. Beispielsweise kann der Beton als Feinkornbeton mit einem Größtkorn von weniger als 2 mm ausgebildet sein. Der Anteil der Zuschlagstoffe an der Gesamtmischung beträgt vorzugsweise nicht mehr als 50%, insbesondere nicht mehr als 25%.

Bei einer bevorzugten Ausgestaltung weisen die erste Schicht und die zumindest eine weitere Schicht im Wesentlichen identische Materialeigenschaften auf. Durch das Zwei- bzw. Mehrschichtsystem können trotz im Wesentlichen identischer Materialeigenschaften verbesserte Festigkeitseigenschaften ermöglicht werden.

Bei einer weiteren bevorzugten Ausgestaltung weisen die erste Schicht und die zumindest eine weitere Schicht im Wesentlichen unterschiedliche Materialeigenschaften auf. Beispielsweise können so unterschiedliche Schichten mit unterschiedlichen spezifischen Eigenschaften ausgelegt werden. Beispielsweise kann die erste Schicht zur Aufnahme von Druckbelastungen und die zumindest eine weitere Schicht zur Aufnahme von Zug- und/oder Biegespannungen ausgebildet sein. Vorzugsweise ist die Orientierung der Bewehrungsfasern in der ersten Schicht und in der zumindest einen weiteren Schicht im Wesentlichen unidirektional, wobei die Orientierung der Bewehrungsfasern in der ersten Schicht von der Orientierung der Bewehrungsfasern in der zumindest einen weiteren Schicht abweichen, insbesondere orthogonal zu dieser verlaufen, kann.

Eine vorteilhafte Verbindung der ersten Schicht mit der zumindest einen weiteren Schicht kann zudem dafür sorgen, dass die Rissbildung, insbesondere die Entstehung von Mikrorissen, aufgrund einer verbesserten Lastaufnahme reduziert wird. Zudem können beispielsweise die Fertigungskosten reduziert werden, da eine geringere Schichtdicke zur Verfügungstellung der erforderten Festigkeitseigenschaften und dadurch bedingt auch weniger Material benötigt wird.

Vorzugsweise weist die erste Schicht und die zumindest eine weitere Schicht eine Dicke zwischen 2 mm und 100 mm, insbesondere zwischen 2 mm und 20 mm, besonders bevorzugt zwischen 3 mm und 8 mm auf. Ein derartiger Dickenbereich hat sich als ausreichend zur Aufnahme der während der Verwendung aufzunehmenden Lasten erwiesen.

Neben der einen ersten Schicht und der zumindest einen weiteren Schicht können auch weitere Schichten vorgesehen werden. Vorzugsweise weisen auch die weiteren Schichten zu den anderen Schichten korrespondierende Oberflächen, insbesondere zu den jeweiligen Nachbarschichten, auf.

Vorzugsweise ist eine Schicht vorliegend derart zu verstehen, dass diese im Wesentlichen eine definierte Materialzusammensetzung und/oder eine definierte Funktion aufweist und sich über eine Fläche erstreckt. Eine Schicht kann eine gleichmäßige oder ungleichmäßige Dicke aufweisen, wobei es vorliegend bevorzugt ist, wenn eine Schicht eine im Wesentlichen gleichmäßige Dicke aufweist. Eine Schicht kann vollflächig oder abschnittsweise vorhanden sein und ist zumindest mit einer weiteren Schicht verbunden. Der Begriff Schicht umfasst vorliegend sowohl Schichten, die durch Aufbringung (z. B. Gießen, Beschichten, Auflaminieren) als auch durch Zusammenfügen (z. B. Laminieren, Verkleben) hergestellt werden.

Eine weitere bevorzugte Ausgestaltung ist dadurch gekennzeichnet, dass die erste Schicht und die zumindest eine weitere Schicht an ihren einander zugewandten Oberflächen zueinander korrespondierende Strukturen aufweisen, wobei die zueinander korrespondierenden Strukturen in Form, Größe, und/oder Anordnung aufeinander abgestimmt sind. Durch eine Abstimmung der Form, Größe und/oder Anordnung der zueinander korrespondierenden Strukturen kann eine mechanisch effektive Verbindung der ersten Schicht und der zumindest einen weiteren Schicht ermöglicht werden. Vorzugsweise sind die korrespondierenden Strukturen der ersten Schicht und der zumindest einen weiteren Schicht derart aufeinander abgestimmt, dass diese einen Formschluss zwischen den einander zugewandten Oberflächen der ersten Schicht und der zumindest einen weiteren Schicht ermöglichen.

Eine weitere bevorzugte Ausgestaltung ist dadurch gekennzeichnet, dass die zueinander korrespondierenden Strukturen als zueinander korrespondierende Profilstrukturen, insbesondere als zueinander korrespondierende und verzahnte Profilstrukturen, ausgebildet sind. Beispielsweise können die zueinander korrespondierenden Strukturen auch in Form von Vorsprüngen und Vertiefungen, Verzahnungen, Wellenprofilen und/oder anderen geometrischen Mustern ausgebildet sein. Insbesondere können die zueinander korrespondierenden Strukturen derart ausgestaltet sein, dass sie eine vergrößerte Kontaktfläche zwischen den Schichten schaffen, einen Positionierungseffekt der Schichten zueinander hervorrufen und/oder eine verbesserte mechanische Kraftübertragung zwischen den Schichten ermöglichen.

Beispielsweise können die zueinander korrespondierenden Strukturen auch als noppenartige Profilstrukturen ausgebildet werden, wodurch beispielsweise die Oberflächenrauheit der zueinander korrespondierenden Strukturen und damit auch die Kraftübertragung von der ersten Schicht und der zumindest einen weiteren Schicht verbessert werden kann.

Eine weitere bevorzugte Ausgestaltung ist dadurch gekennzeichnet, dass die zueinander korrespondierenden Strukturen als zueinander korrespondierende, gewölbte Strukturen ausgebildet sind. Insbesondere weisen die korrespondierenden und gewölbten Strukturen eine geringe Krümmung auf, wodurch die Kraftübertragung zwischen der ersten Schicht und der zumindest einen weiteren Schicht verbessert werden kann. Durch die Ausbildung der korrespondierenden Strukturen als korrespondierende, gewölbte Strukturen kann eine großflächige und gleichmäßige Kontaktzone zwischen den Schichten geschaffen werden, was insbesondere bei der Aufnahme und Verteilung von Druck- und Schubkräften vorteilhaft sein kann.

Die gewölbten Strukturen können beispielsweise als konvexe und/oder konkave Bereiche ausgebildet sein, die im Wesentlichen passgenau ineinandergreifen. Alternativ können im Wesentlichen aufeinander abgestimmte Wölbungen vorgesehen sein, die durch die Abstimmung von Größe und Krümmungsradius ebenfalls eine präzise Verbindung ermöglichen. Diese Gestaltung erlaubt eine vorteilhafte Verbindung der Schichten und fördert die mechanische Stabilität.

Eine weitere bevorzugte Ausgestaltung ist dadurch gekennzeichnet, dass zwischen der ersten Schicht und der zumindest einen weiteren Schicht zumindest eine Isolierungsschicht, zumindest eine Haftvermittlerschicht und/oder zumindest eine Bewehrungsschicht angeordnet ist. Vorzugsweise sind die zumindest eine Isolierungsschicht, zumindest eine Haftvermittlerschicht und/oder zumindest eine Bewehrungsschicht aus einem anderen Stoff oder aus einem anderen Material hergestellt bzw. weist eine andere Zusammensetzung als die erste Schicht und/oder die zumindest eine weitere Schicht auf.

Durch das Vorsehen einer Isolierungsschicht kann beispielsweise die thermische und/oder die akustische Isolation des Betonfertigteils verbessert werden. Die Isolierungsschicht kann beispielsweise Materialien wie expandiertes Polystyrol (EPS), extrudiertes Polystyrol (XPS), Polyurethanschaum und/oder mineralische Isolierstoffe umfassen. Durch die Platzierung der Isolierungsschicht zwischen den faserverstärkten Betonschichten kann eine verbesserte Energieeffizienz erreicht werden, da Wärmeverluste minimiert werden können. Zudem kann die Isolierungsschicht für ein verbessertes Raumklima in Gebäudestrukturen sorgen, in denen das Betonfertigteil verwendet wird. Die mechanische Integration der Isolierungsschicht innerhalb des mehrschichtigen Betonfertigteils kann gewährleisten, dass die isolierenden Eigenschaften nicht durch Risse oder Delamination beeinträchtigt werden.

Die Haftvermittlerschicht fördert die Verbundwirkung zwischen der ersten Schicht und der zumindest einen weiteren Schicht, insbesondere dann, wenn die Materialien der Schichten unterschiedlich sind oder spezielle Anforderungen an die Grenzfläche gestellt werden. Typische Haftvermittler können beispielsweise Suspensionen, insbesondere zementhaltige Suspensionen wie polymermodifizierte Zemente, Dispersionen und/oder Wasser sein. Ebenfalls können Epoxidharze, Polyurethane oder spezielle Beschichtungen verwendet werden, die eine verbesserte Adhäsion der beiden Schichten gewährleisten. Die Haftvermittlerschicht oder Anbindungsschicht kann auch mikroskopische Unebenheiten oder Porosität an den Oberflächen der ersten Schicht und/oder der zumindest einen weiteren Schicht ausgleichen, wodurch eine homogene Kraftübertragung zwischen den Schichten ermöglicht wird. Der Einsatz einer Haftvermittlerschicht ist insbesondere vorteilhaft, wenn sich die mechanischen Eigenschaften der Schichten unterscheiden, da sie Spannungsübertragungen harmonisieren und das Risiko von Delamination reduzieren kann.

Mittels einer Bewehrungsschicht kann eine mechanische Verstärkung ermöglicht werden, die die Tragfähigkeit und Stabilität des Betonfertigteils weiter erhöht. Die Bewehrungsschicht kann beispielsweise in Form von Stahlmatten, Stäben, Glasfaserverstärkungen und/oder Carbonbewehrungen ausgeführt sein. Diese können ebenfalls Teil einer Betonmatrix sein. Die Platzierung der Bewehrungsschicht zwischen der ersten Schicht und der zumindest einen weiteren Schicht erlaubt es, spezifischen Belastungsanforderungen, wie Zug- oder Biegekräfte, verbessert aufzunehmen. Darüber hinaus ermöglicht das zusätzliche Vorsehen einer Bewehrungsschicht, die Dicke der ersten Schicht und/oder der zumindest einen weiteren Schicht zu reduzieren, ohne wesentliche Einbußen bei der Festigkeit oder Stabilität des Betonfertigteils hinnehmen zu müssen. Dies trägt zur Materialeinsparung bei und erleichtert den Transport und die Montage des Betonfertigteils.

Eine weitere bevorzugte Ausgestaltung ist dadurch gekennzeichnet, dass die erste Schicht und/oder die zumindest eine weitere Schicht eine kumulierte Porosität von weniger als 15 Vol.-%., insbesondere von weniger als 10 Vol.-% aufweist. Insbesondere wird die kumulierte Porosität im Bereich zwischen Kapillaren und Gelporen, vorzugweise definiert durch eine Porengröße von 0,03 µm bis 100 µm, gemessen. Insbesondere ist die erste Schicht und/oder die zumindest eine weitere Schicht vorzugsweise im Wesentlichen frei von Mikroporen. Eine geeignete Messmethodik zur Bestimmung dieser Porosität ist die Quecksilberdruckporosimetrie

Eine Porosität (im definierten Bereich zwischen Kapilar - und Gelporen) von weniger als 15%, insbesondere von weniger als 10%, bedeutet, dass die Menge der im Material enthaltenen Hohlräume reduziert ist. Dies kann durch bestimmte Herstellungsverfahren der Schichten, wie beispielsweise dem Walzen, erreicht werden. Der niedrige Porenanteil erhöht die Dichte der Schichten und hat Vorteile für die mechanische Festigkeit und Dauerhaftigkeit des Betonfertigteils.

Eine weitere vorteilhafte Ausgestaltung ist dadurch gekennzeichnet, dass die erste Schicht und/oder die zumindest eine weitere Schicht Bewehrungsfasern, insbesondere Carbonfasern, umfassen, wobei die Bewehrungsfasern der ersten Schicht und/oder die Bewehrungsfasern der zumindest einen weiteren Schicht jeweils vorzugsweise im Wesentlichen unidirektional verlaufen. Dies ermöglich eine gezielte Verstärkung der ersten Schicht und/oder der zumindest einen weiteren Schicht, so dass die mechanischen Eigenschaften des Betonfertigteils weiter verbessert werden können.

Der Einsatz von Bewehrungsfasern, insbesondere Carbonfasern, dient dazu, die Zug- und Biegefestigkeit der Betonmatrix der Schichten zu erhöhen, indem die Fasern auftretende Zugspannungen aufnehmen und im Wesentlichen gleichmäßig im Material verteilen. Carbonfasern zeichnen sich durch eine hohe Festigkeit, eine geringe Dichte, ein hohes E-Modul sowie eine vorteilhafte Korrosionsbeständigkeit aus. Alternativ können auch Glasfasern, Basaltfasern und/oder andere Hochleistungsfasern sowie Fasern biologischen Ursprungs verwendet werden, je nach den spezifischen Anforderungen an das Betonfertigteil.

Die Anordnung der Bewehrungsfasern in einem im Wesentlichen unidirektionalen Verlauf sorgt dafür, dass die Verstärkung in eine bevorzugte Richtung ausgerichtet ist. Dies ist insbesondere vorteilhaft, wenn das Betonfertigteil einer Hauptbelastungsrichtung ausgesetzt ist, wie beispielsweise bei Balken, Platten oder Trägern. Durch die gezielte Ausrichtung der Bewehrungsfasern können die Schichten effektiv auf die auftretenden Kräfte abgestimmt werden, wodurch Materialeffizienz und Leistungsfähigkeit optimiert werden können.

Beispielsweise kann die erste Schicht des Betonfertigteils unidirektionale Carbonfasern enthalten, die entlang der Längsrichtung verlaufen, um Zugkräfte in einem Betonfertigteil aufzunehmen. Die zumindest eine weitere Schicht kann beispielsweise ebenfalls unidirektionale Fasern enthalten, die orthogonal dazu ausgerichtet sind, um Querkräfte zu kompensieren.

Eine bevorzugte Ausgestaltung ist daher dadurch gekennzeichnet, dass die Bewehrungsfasern der ersten Schicht im Wesentlichen orthogonal zu den Bewehrungsfasern der zumindest einen weiteren Schicht verlaufen. Eine orthogonale Ausrichtung der Bewehrungsfasern bedeutet, dass die Fasern der ersten Schicht und der zumindest einen weiteren Schicht in einem Winkelbereich zwischen 87° und 93°, insbesondere von im Wesentlichen 90°, zueinander verlaufen. Diese Konfiguration schafft eine multidirektionale Verstärkungsstruktur, die Zugkräfte und Biegebeanspruchungen aus unterschiedlichen Richtungen effizient aufnehmen kann. Dies ist insbesondere bei Betonfertigteilen von Vorteil, die komplexen Lastbedingungen unterliegen, wie etwa Platten, Wandscheiben oder Bauelementen, die mehrdimensionalen Belastungen ausgesetzt sind und insbesondere in horizontale Richtungen Last abtragen sollen.

Eine weitere Ausgestaltung ist dadurch gekennzeichnet, dass die Bewehrungsfasern der ersten Schicht im Wesentlichen schräg und/oder diagonal zu den Bewehrungsfasern der zumindest einen weiteren Schicht verlaufen. Eine schräge und/oder diagonale Ausrichtung der Bewehrungsfasern bedeutet, dass die Fasern der ersten Schicht und der zumindest einen weiteren Schicht in einem Winkelbereich zwischen 42° und 48°, insbesondere von im Wesentlichen 45°, zueinander verlaufen. Dies hat sich insbesondere bei Aufnahme von Schubkräften als vorteilhaft erwiesen. Eine weitere bevorzugte Ausgestaltung ist dadurch gekennzeichnet, dass die Bewehrungsfasern der ersten Schicht und/oder die Bewehrungsfasern der zumindest einen weiteren Schicht einen Durchmesser zwischen 2 µm und 10 µm, insbesondere zwischen 4 µm und 8 µm, aufweisen. Diese spezifische Dimensionierung der Bewehrungsfasern hat sich als vorteilhaft hinsichtlich der mechanischen Eigenschaften des Betonfertigteils erwiesen. Der Durchmesser der Bewehrungsfasern beeinflusst deren mechanische Kraftaufnahme innerhalb der Betonmatrix. Ein Durchmesser im Bereich von 2 µm bis 10 µm ermöglicht eine vorteilhafte Kombination aus Zugfestigkeit, Flexibilität und Oberflächenkontakt mit der umgebenden Betonmatrix. Bewehrungsfasern mit einem Durchmesser von 4 µm bis 8 µm, bieten dabei ein besonders vorteilhaftes Verhältnis zwischen mechanischer Festigkeit und effektiver Lastübertragung.

Eine weitere bevorzugte Ausgestaltung ist dadurch gekennzeichnet, dass die Bewehrungsfasern der ersten Schicht und/oder die Bewehrungsfasern der zumindest einen weiteren Schicht eine mittlere Länge zwischen 0,5 mm bis 15 mm, insbesondere zwischen 1 mm und 10 mm, aufweisen. Eine solche Längenwahl hat sich als vorteilhaft hinsichtlich der Fertigung des Betonfertigteils, insbesondere der Ausrichtung der Bewehrungsfasern, sowie der mechanischen Eigenschaften des Betonfertigteils erwiesen.

Die mittlere Länge der Bewehrungsfasern spielt eine Rolle bei der Verstärkung der Betonmatrix. Fasern in diesem Längenbereich ermöglichen eine gezielte und effiziente Verteilung der Lasten und tragen zur Verbesserung der Zug- und Biegefestigkeit des Betonfertigteils bei. Eine Länge zwischen 1 mm und 10 mm hat sich als besonders vorteilhaft herausgestellt, da diese Fasern eine gute Balance zwischen Festigkeit und Flexibilität bieten und gleichzeitig eine gleichmäßige Verteilung innerhalb der Betonmatrix ermöglichen.

Eine mittlere Länge bezeichnet vorliegend insbesondere den Durchschnittswert der Längen aller Bewehrungsfasern innerhalb einer bestimmten Schicht des Betonfertigteils. Sie wird berechnet, indem die Längen der einzelnen Fasern gemessen werden und anschließend der Durchschnitt dieser Längen gebildet wird. **In** diesem Fall bezieht sich die "mittlere Länge" auf den durchschnittlichen Wert der Faserlängen, die in der ersten und/oder der zumindest einen weiteren Schicht des Betonfertigteils enthalten sind.

Die mittlere Länge kann auf unterschiedliche Weise bestimmt werden, beispielsweise durch die direkte Messung der Fasern in einer Stichprobe oder durch Messung der Länge der Fasern bei der Fertigung des Betonfertigteils.

Eine bevorzugte Ausgestaltung ist dadurch gekennzeichnet, dass die Bewehrungsfasern der ersten Schicht und/oder die Bewehrungsfasern der zumindest einen weiteren Schicht unterschiedliche Längen aufweisen, wobei die Längenverteilung der Bewehrungsfasern der ersten Schicht und/oder der zumindest einen weiteren Schicht zwischen 0,1 mm und 40 mm, insbesondere zwischen 0,2 mm und 30 mm, liegt. Hierdurch können weiter vorteilhafte mechanische Eigenschaften des Betonfertigteils zur Verfügung gestellt werden.

Die Längenverteilung der Bewehrungsfasern beschreibt die Streuung der Faserlängen innerhalb der ersten Schicht und/oder der zumindest einen weiteren Schicht des Betonfertigteils. Durch die Verwendung von Fasern unterschiedlicher Längen kann die Kraftübertragung zwischen den Bewehrungsfasern und der Betonmatrix gezielt verbessert werden. Fasern mit kürzeren Längen (im unteren Bereich der Längenverteilung) bieten eine feinere, gleichmäßigere Verstärkung, die besonders für die Verhinderung von Mikrorissen und die Verbesserung der Haftung zwischen Matrix und Faser von Vorteil ist. Längere Fasern wiederum können tragende Eigenschaften ermöglichen, die größere Lasten aufnehmen und so die Festigkeit des Betonfertigteils erhöhen können.

Eine weitere bevorzugte Ausgestaltung ist dadurch gekennzeichnet, dass das Betonfertigteil, insbesondere die erste Schicht und/oder die zumindest eine weitere Schicht, umfasst:
- 25 bis 50 Gew.-% Sand;
- 40 bis 70 Gew.-% Zement;
- 5 bis 30 Gew.-% Zusatzstoff;
- 1 bis 5 Gew.-% Bewehrungsfasern;
- 0,5 bis 4 Gew.-% Plastifizierer; und
- 1 bis 4 Gew.-% Retentionsmittel.

Vorgenannte Zusammensetzung ist vorteilhaft hinsichtlich der mechanischen Eigenschaften, der Haltbarkeit und der Verarbeitbarkeit des Betonfertigteils.

Zement ist der Hauptbestandteil des Betons und dient als Bindemittel, das die anderen Komponenten zusammenhält und die gewünschte Festigkeit ermöglicht. Die Menge von 40 bis 70 Gew.-% ermöglicht, dass der Beton die notwendige Festigkeit und Stabilität aufweist, um den strukturellen Anforderungen zu entsprechen, während gleichzeitig eine ausreichende Verarbeitbarkeit erhalten bleibt.

Vorzugsweise handelt es sich bei dem Sand um Sand mit einer Korngröße von kleiner oder gleich 2 mm.

Zement kann gemäß der EN 197-1 Norm (Europäische Norm für "Gemeiner Portlandzement") ein Bindemittel sein, das beispielsweise durch das Mahlen von Klinker, der aus einer Mischung von Kalkstein, Ton und anderen mineralischen Materialien gewonnen werden kann, insbesondere zusammen mit einer geringen Menge an Gips hergestellt werden kann. Die EN 197-1 definiert Zement als ein Material, das durch Reaktion mit Wasser eine feste, widerstandsfähige Masse bildet und als Bindemittel in Beton, Mörtel und anderen Zementprodukten verwendet wird. Insbesondere ist es bevorzugt, dass ein Zement bestehend aus zwei oder drei Hauptbestandteilen verwendet wird. Dieser Zement kann neben Klinker einen weiteren Bestandteil aus der Gruppe der latent-hydraulischen oder puzzolanischen Stoffe, z. B. Hüttensand sowie Kalksteinmehl enthalten.

Als Alternative zu Zement kann auch 40 bis 70 Gew.-% Zementleim verwendet werden. Zementleim ist vorzugsweise eine Mischung aus Zement und Wasser, welche im Vergleich zu herkömmlichem Beton ein höheres Wasser-Zement-Verhältnis aufweist und in der Regel eine dünnflüssigere Konsistenz hat. Der Einsatz von Zementleim anstelle von reinem Zement kann verbesserte Verarbeitungseigenschaften und eine verbesserte Integrität der Schichten im Betonfertigteil ermöglichen.

Zusatzstoffe werden in DIN 1045-2 definiert. Es wird zwischen Typ I und Typ II Zusatzstoffen unterschieden. Während Typ I Zusatzstoffe als inert gelten, weisen Typ II Zusatzstoffe wie beispielsweise Mikrosilika (auch als Silicastaub oder Silica fume bekannt) puzzolansiche Eigenschaften auf. Mikrosilika ist beispielsweise ein hochfeines, insbesondere amorphes Siliziumdioxid, das als Zusatzstoff im Beton verwendet wird, um die Festigkeit und Haltbarkeit zu verbessern. Zusatzstoffe reduzieren die Porosität und erhöhen die Dichtigkeit des Betons, was beispielsweise zu einer besseren Widerstandsfähigkeit gegen Feuchtigkeit und Frost führt. Der Anteil von 5 bis 30 Gew.-% sorgt für eine vorteilhafte Verbesserung der Festigkeit und Verarbeitbarkeit des Betons, insbesondere bei der Verwendung von faserverstärktem Beton, und trägt zudem zu einer verringerten Wasseraufnahme bei. Zusatzstoffe können aus einem bestimmten Stoff bestehen oder als Mischung verschiedener Stoffe zusammen gesetzt sein.

Die Bewehrungsfasern, die in diesem Fall vorzugsweise Carbonfasern oder andere geeignete Fasern sein können, tragen zur Verbesserung der Festigkeit und Rissbeständigkeit des Betons bei. Der Anteil von 1 bis 5 Gew.-% ermöglicht eine gezielte Verstärkung des Betons. Dies sorgt für eine verbesserte Lastübertragung und verhindert die Ausbreitung von Mikrorissen und größeren Rissen unter Belastung. Vorzugsweise werden die Bewehrungsfasern, insbesondere die Carbonfasern, durch eine Temperaturbehandlung, insbesondere unter Schutzgasatmosphäre, hergestellt, um etwaige Oberflächenanhaftungen zu beseitigen, zu pyrolisieren und/oder zu torrefizieren.

Plastifizierer sind insbesondere Chemikalien, die die Fließfähigkeit und Verarbeitbarkeit des Betons verbessern, ohne die Festigkeit negativ zu beeinflussen. Sie können den Wasseranteil im Beton reduzieren und dennoch eine gute Verarbeitung und eine gleichmäßige Verteilung der Bewehrungsfasern ermöglichen. Der Anteil von 0,5 bis 4 Gew.-% kann gewährleisten, dass der Beton ausreichend fließfähig bleibt, um eine homogene Mischung und ein einfaches Gießen zu ermöglichen, ohne die Stabilität und Festigkeit des Endprodukts zu beeinträchtigen.

Vorzugsweise stammen die Plastifizierer aus der Gruppe der, insbesondere anionischen, Polymere, insbesondere aus der Gruppe der Sulfonate, Carbonsäuren, Polycarboxylathether oder Carboxylether. Beispielsweise können die Plastifizierer auch Graphen enthalten oder auf Graphen basieren. Diese spezifischen Plastifizier wirken als Dispergiermittel, die die Viskosität von Betonmischungen verringern können, ohne die Festigkeit und strukturellen Eigenschaften des Betons wesentlich beeinträchtigen. Durch die Verwendung der vorgenannten Plastifizierer kann die Verarbeitbarkeit des Betons verbessert und der Wassergehalt bei gleichzeitig guter Konsistenz reduziert werden.

Retentionsmittelwerden verwendet, um das plastische Verhalten der Rohmasse zu verbessern.. Der Anteil von 1 bis 4 Gew.-% ermöglicht, dass der Beton vorteilhafte plastische Eigenschaften aufweist.

Vorzugsweise stammt das verwendete Retentionsmittelaus der Gruppe der Cellulosen. Diese haben sich als besonders vorteilhaft erwiesen, um die Porosität des Betonfertigteils zu verringern und damit die Beständigkeit des Betonfertigteils zu erhöhen. Beispielsweise können Cellulosederivate wie Methylcellulose, Hydroxyethylcellulose oder Carboxymethylcellulose als Retentionsmittelverwendet werden.

Gemäß einem zweiten Aspekt wird die vorgenannte Aufgabe ebenfalls durch ein Verfahren zur Herstellung eines Betonfertigteils, insbesondere eines vorgenannten Betonfertigteils gelöst, wobei das Verfahren umfasst: Bereitstellen einer faserhaltigen, zementgebundenen Masse; Walzen der faserhaltigen, zementgebundenen Masse zu einer ersten Schicht;; Walzen der faserhaltigen, zementgebundenen Masse zu zumindest einer weiteren Schicht; Formen der einen ersten Schicht und der zumindest einen weiteren Schicht derart, dass die erste Schicht und die zumindest eine weitere Schicht einander zugewandte und zueinander korrespondierende Oberflächen aufweisen; Verbinden der ersten geformten Schicht und der zumindest einen weiteren Schicht zu einer Vorform; optionales Umformen der Vorform zu einem Betonfertigteil.

Vorzugsweise umfasst das Verfahren die folgenden Schritte: Bereitstellen einer ersten faserhaltigen, zementgebundenen Masse; Walzen der ersten faserhaltigen, zementgebundenen Masse zu einer ersten Schicht; Bereitstellen zumindest einer weiteren faserhaltigen, zementgebundenen Masse; Walzen der zumindest einen weiteren faserhaltigen, zementgebundenen Masse zu zumindest einer weiteren Schicht; Formen der einen ersten Schicht und der zumindest einen weiteren Schicht derart, dass die erste Schicht und die zumindest eine weitere Schicht einander zugewandte und zueinander korrespondierende Oberflächen aufweisen; Verbinden der ersten geformten Schicht und der zumindest einen weiteren Schicht zu einer Vorform; optionales Umformen der Vorform zu einem Betonfertigteil.

Die im Zusammenhang mit dem vorgenannten Betonfertigteil genannten Merkmale und Vorteile gelten gleichermaßen für das erfindungsgemäße Verfahren gemäß dem zweiten Aspekt. Insbesondere ist es bevorzugt, dass die Zusammensetzung der (ersten) faserhaltigen zementgebundenen Masse und/oder die Zusammensetzung der zumindest einen weiteren faserhaltigen, zementgebundenen Masse der zuvor beschriebenen Zusammensetzung der ersten Schicht und/oder der zumindest einen weiteren Schicht entspricht.

Beim Bereitstellen der (ersten) faserhaltigen, zementgebundenen Masse und der zumindest einen weiteren faserhaltigen, zementgebundenen Masse wird eine Masse zur Verfügung gestellt, welche insbesondere eine zuvor spezifizierte Zusammensetzung aufweist. Die zur Verfügung gestellten Bewehrungsfasern können in der Masse orientiert oder zufällig verteilt eingebracht werden. Vorzugsweise werden die Bewehrungsfasern zufällig orientiert eingebracht, wobei eine Ausrichtung der Fasern im Rahmen der Walzschritte vorgesehen wird. Vorzugsweise werden zuvor spezifizierte Bewehrungsfasern verwendet.

Beim Walzen der (ersten), faserhaltigen, zementgebundenen Masse zu einer ersten Schicht und der zumindest einen weiteren faserhaltigen, zementgebundenen Masse zu zumindest einer weiteren Schicht kann die Masse im Wesentlichen gleichmäßig verdichtet werden. Zudem können die in der Masse oder in den Massen vorhandenen Bewehrungsfasern durch den Walzprozess im Wesentlichen unidirektional ausgerichtet werden und zudem eine im Wesentlichen homogene Verteilung der Bewehrungsfasern ermöglicht werden. Durch das Walzen kann zudem die Porosität der Schichten reduziert werden. Beispielsweise kann durch eine Steuerung des jeweiligen Walzverfahrens die Dicke der jeweiligen Schicht eingestellt werden. Nach dem Walzen weisen die Schichten beispielsweise ein im Wesentlichen plattenförmige Form auf.

Ferner werden die zumindest eine Schicht und die zumindest eine weitere Schicht derart geformt, dass die erste Schicht und die zumindest eine weitere Schicht einander zugewandte und zueinander korrespondierende Oberflächen aufweisen. Das Formen dieser Schichten kann beispielsweise während der Walzschritte ermöglicht werden oder separat nach den Walzschritten durchgeführt werden. Beispielsweise können die einander zugewandten und zueinander korrespondierenden Oberflächen durch Prägebleche oder Prägewalzen eingebracht werden.

Anschließend werden die erste geformte Schicht und die zumindest eine weitere geformte Schicht zu einer Vorform verbunden. Dies kann durch Pressen, Walzen, Laminieren, Verkleben, ein anderes Fügeverfahren und/oder eine Kombination der dieser erfolgen. Die Vorform kann dem Betonfertigteil entsprechen, falls kein weiterer Umformschritt durchgeführt wird.

Abschließend kann die hergestellte Vorform weiter umgeformt werden. Möglicherweise kann auf den Umformschritt verzichtet werden, so dass die Vorform bereits dem Betonfertigteil entspricht. Andernfalls kann die Vorform derart umgeformt werden, dass die gewünschte Geometrie des Betonfertigteils erreicht wird. Dies kann beispielsweise durch Pressen, Schneiden und/oder eine thermische Behandlung erfolgen. Dieser Schritt ermöglicht eine Anpassung des Betonfertigteils an die spezifischen Anforderungen, wie etwa den Einsatz als tragendes Bauteil in Bauwerken. Insbesondere können dreidimensionale Strukturen des Betonfertigteils vorgesehen werden.

Eine weitere bevorzugte Ausgestaltung ist dadurch gekennzeichnet, dass vor Verbinden der ersten geformten Schicht und der zumindest einen weiteren Schicht Wasser, zumindest eine Suspension, insbesondere zumindest eine zementhaltige Suspension, und/oder eine Dispersion auf zumindest eine der einander zugewandten Oberflächen der ersten geformten Schicht und/oder der zumindest einen weiteren Schicht aufgebracht wird.

Beispielsweise kann durch die Verwendung von Wasser als Benetzungsmittel eine ausreichende Befeuchtung der Oberfläche der ersten geformten Schicht und/oder der Oberfläche der zumindest einen weiteren geformten Schicht ermöglicht werden, wodurch eine zuverlässige chemische Bindung zwischen den Schichten entstehen kann. Eine zementhaltige Suspension kann beispielsweise als eine Art Haftvermittler, insbesondere als eine Art Haftvermittlerschicht wirken. Die damit zusammenhängenden Vorteile sind bereits in Bezug zu dem Betonfertigteil beschrieben. Bei der alternativen oder zusätzlichen Verwendung einer Dispersion, beispielsweise auf Basis von Bindemitteln, kann zusätzlich die Adhäsion zwischen den Schichten verbessert werden. Auch mittels einer Dispersion kann eine Haftvermittlerschicht vorgesehen werden.

Das Aufbringen von Wasser, zumindest einer Suspension, insbesondere zumindest einer zementhaltigen Supension und/oder einer Dispersion kann beispielsweise durch Sprühen, Streichen oder Tauchen durchgeführt werden.

Eine weitere bevorzugte Ausgestaltung ist dadurch gekennzeichnet, dass die zueinander korrespondierenden Oberflächen der ersten Schicht und der zumindest einen weiteren Schicht während des Walzens eingebracht werden. Hierdurch können in fertigungstechnischer günstiger Weise ohne zusätzlichen Produktionsschritt zueinander korrespondierende Oberflächen der Schichten vorgesehen werden. Beispielsweise können die Walzen hierzu eine profilierte und/oder geprägte Oberfläche aufweisen. Ebenfalls können die Walzen eine konvexe und/oder konkave Walzengeometrie aufweisen, wobei die Walzen unterschiedliche Längungs- und/oder Breitungsfaktoren aufweisen können, wodurch beispielweise doppelt gewölbte Oberflächen der ersten Schicht und/oder der zumindest einen weiteren Schicht erzeugt werden können.

Eine weitere bevorzugte Ausgestaltung ist dadurch gekennzeichnet, dass vor Verbinden der ersten geformten Schicht und der zumindest einen weiteren Schicht eine Isolierungsschicht, eine Haftvermittlerschicht und/oder eine Bewehrungsschicht zwischen der ersten geformten Schicht und der zumindest einen weiteren Schicht angeordnet wird. Die hiermit verbundenen technischen Effekte sowie Vorteile sind vorstehend im Zusammenhang mit dem Betonfertigteil erläutert.

Eine weitere bevorzugte Ausgestaltung ist dadurch gekennzeichnet, dass die Vorform zu einem dreidimensionalen Betonfertigteil, insbesondere mittels Tiefziehen, Pressen und/oder Walzen umgeformt wird. Dieser Verfahrensschritt ermöglicht die Herstellung komplexer Geometrien und trägt dazu bei, die Vielseitigkeit der Betonfertigteile für unterschiedliche Anwendungen im Bauwesen zu erhöhen.

Nach dem Verbinden der ersten geformten Schicht mit der zumindest einen weiteren geformten Schicht kann eine Vorform zur Verfügung gestellt werden, die zunächst eine einfache Geometrie aufweisen kann, beispielsweise eine planare oder annähernd planare Struktur. Durch die nachfolgende Umformung wird diese Vorform in eine gewünschte dreidimensionale (End-)Form gebracht. Dabei kann die Umformung durch verschiedene Verfahren wie Tiefziehen, Pressen oder Walzen realisiert werden.

Beim Tiefziehen wird die Vorform beispielsweise in eine speziell gestaltete Form oder Matrize eingespannt und durch die Einwirkung von Druck- oder Zugkräften plastisch verformt. Dieses Verfahren eignet sich besonders für die Herstellung von Betonfertigteilen mit gekrümmten und/oder gewölbten Oberflächen. Tiefziehen erlaubt eine präzise Anpassung der Geometrie an die Anforderungen des jeweiligen Einsatzbereichs.

Das Pressen ist eine weitere Methode zur Umformung der Vorform, bei der durch die Anwendung von Druckkräften eine dichte und maßhaltige dreidimensionale Struktur erzeugt wird. Dieses Verfahren ist besonders geeignet, wenn hohe Anforderungen an die Maßhaltigkeit und Festigkeit des Fertigteils gestellt werden, beispielsweise bei tragenden Betonfertigteilen. Das Pressen bietet zudem den Vorteil, dass die mechanischen Eigenschaften der Schichten weiter verbessert werden können, da eine zusätzliche Verdichtung der Schichten erreicht werden kann.

Durch Walzen kann die Vorform ebenfalls in eine dreidimensionale Geometrie überführt werden. Hierbei werden die Schichten unter Einsatz spezieller Walzen mit entsprechenden Konturen geformt. Dieses Verfahren eignet sich insbesondere für großflächige Betonfertigteile oder Elemente mit sich wiederholenden geometrischen Mustern.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden. Die Reihenfolge der einzelnen Schritte in den dargestellten Verfahrensübersichten gibt nicht notwendigerweise die tatsächliche (zeitliche) Reihenfolge der Schritte vor und ist lediglich beispielhaft. Nichtsdestotrotz können die Schritte zeitlich in genau der Abfolge auftreten/durchgeführt werden, wie sie in den dargestellten Verfahrensübersichten dargestellt sind. Darüber hinaus können, müssen sie aber nicht in Reaktion aufeinander durchgeführt werden.

Es zeigen
- Fig. 1: eine schematische Ansicht eines ersten Ausführungsbeispiels eines Betonfertigteils in einer Explosionsdarstellung;
- Fig. 2: eine schematische Ansicht eines zweiten Ausführungsbeispiels eines Betonfertigteils in einer Explosionsdarstellung;
- Fig.3: eine schematische Ansicht eines Ausführungsbeispiels einer Schicht eines Betonfertigteils in einer perspektivischen Darstellung;
- Fig. 4: eine schematische Ansicht eines dritten Ausführungsbeispiels eines Betonfertigteils; und
- Fig. 5: ein Flussdiagramm eines Ausführungsbeispiels eines Verfahrens zur Herstellung eines Betonfertigteils.

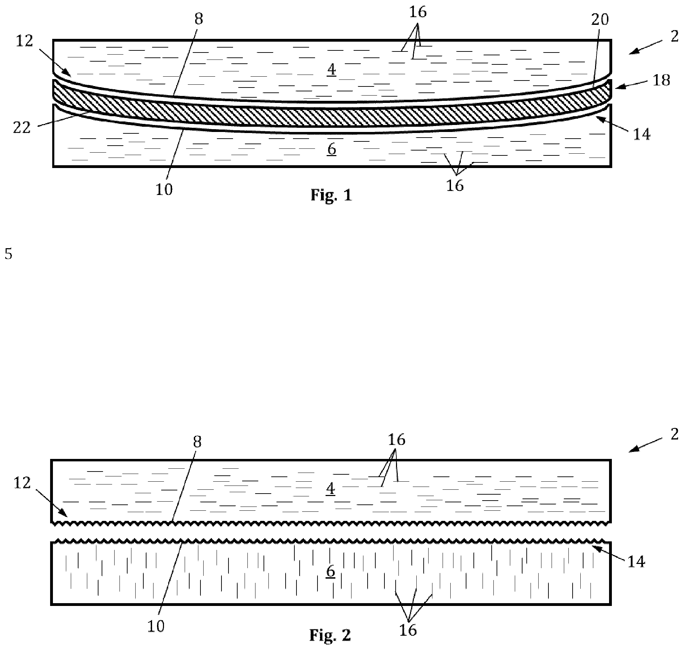

Fig. 1 zeigt eine schematische Ansicht eines ersten Ausführungsbeispiels eines Betonfertigteils 2 in einer Explosionsdarstellung.

Das Betonfertigteil 2 weist eine erste Schicht 4 und eine weitere Schicht 6 auf, wobei beide Schichten 4 und 6 faserverstärkten Beton umfassen. Beide Schichten 4 und 6 weisen an ihren einander zugewandten Oberflächen 8 und 10 korrespondierende Strukturen 12 und 14 auf. Die korrespondieren Strukturen sind vorliegend als konvex verlaufender Teil 12 der Oberfläche 8 der ersten Schicht 4 und als konkav verlaufender Teil 14 der Oberfläche 10 der zweiten Schicht 6 ausgebildet.

Es ist erkennbar, dass in beiden Schichten 4 und 6 Bewehrungsfasern 16 angeordnet sind, wobei die Bewehrungsfasern 16 beider Schichten im Wesentlichen unidirektional und parallel zueinander verlaufen.

Zwischen den beiden Schichten 4 und 6 ist eine Zusatzschicht 18 angeordnet, die beispielsweise als Isolierungsschicht, als Haftvermittlerschicht und/oder als Bewehrungsschicht ausgebildet sein kann. Der Verlauf der beiden länglichen Oberflächen 20 und 22 der Zusatzschicht 18 entspricht vorzugsweise dem Verlauf der jeweils benachbarten korrespondierenden Strukturen 12 und 14 der ersten Schicht 4 und der weiteren Schicht 6.

Fig. 2 zeigt eine schematische Ansicht eines zweiten Ausführungsbeispiels eines Betonfertigteils 2 in einer Explosionsdarstellung. Im Unterschied zu dem in Fig. 1 dargestellten Ausführungsbeispiel ist keine Zusatzschicht 18 zwischen der ersten Schicht 4 und der weiteren Schicht 6 angeordnet. Zudem sind die zueinander korrespondierenden Strukturen 12 und 14 als zueinander korrespondierende Sägezahnprofile an den zueinander gerichteten Oberflächen 8 und 10 ausgebildet. Des Weiteren verlaufen die Bewehrungsfasern 16 in beiden Schichten 4 und 6 unidirektional in der jeweiligen Schicht, allerdings verlaufen die Bewehrungsfasern 16 in der ersten Schicht 4 im Wesentlichen orthogonal zu dem Bewehrungsfasern 16 in der weiteren Schicht 6.

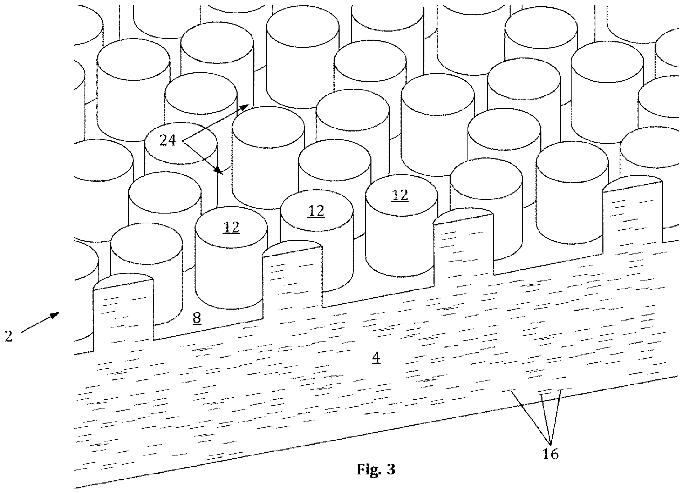

Fig. 3 zeigt eine schematische Ansicht eine dritten Ausführungsbeispiels einer ersten Schicht 4 eines Betonfertigteils 2 in einer perspektivischen Darstellung. Hierbei weist die erste Schicht 4 eine korrespondierende Struktur 12 in Form eine Noppenstruktur auf. Es ist bevorzugt, dass die korrespondierende Struktur 14 der weiteren Schicht 6 korrespondierend dazu ausgebildet ist. Beispielsweise kann die Struktur 14 der weiteren Schicht 6 ebenfalls als Noppenstruktur ausgestaltet sein, wobei diese eine geringere Noppendichte als die Struktur 12 der ersten Schicht 4 aufweisen kann, so dass diese in Freiräume 24 der Struktur 12 eingreifen kann.

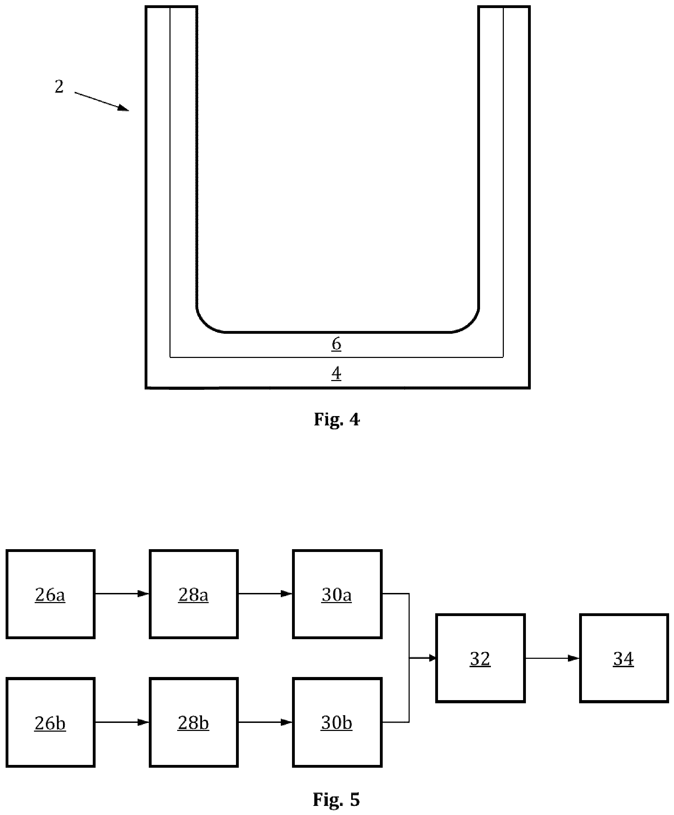

Fig. 4 zeigt eine schematische Ansicht eines vierten Ausführungsbeispiels eines Betonfertigteils 2. Das Betonfertigteil 2 weist ebenfalls zwei Schichten 4 und 6 mit zueinander korrespondierenden Strukturen (nicht dargestellt) auf. Die Bewehrungsfasern 16 sind ebenfalls nicht dargestellt. Das Betonfertigteil 2 ist vorliegend dreidimensional, nämlich als U-Profil, ausgestaltet.

Fig. 5 zeigt ein Flussdiagramm eines Ausführungsbeispiels eines Verfahrens zur Herstellung eines Betonfertigteils 2. Zunächst werden in Bereitstellungsschritten 26a und 26b faserhaltige, zementgebundene Massen bereitgestellt. Anschließend werden die bereitgestellten faserhaltigen und zementgebundenen Massen in Walzschritten 28a und 28b zu einer ersten Schicht 4 und zu einer weiteren Schicht 6 gewalzt. Parallel oder nachfolgend werden die Schichten 4 und 6 in Formungsschritten 30a und 30b geformt, so dass die erste Schicht 4 und die zumindest eine weitere Schicht 6 einander zugewandte und zueinander korrespondierende Oberflächen 8 und 10 aufweisen. Anschließend werden die erste geformte Schicht 4 und die zumindest eine weitere geformte Schicht 6 in einem Verbindungsschritt 32 miteinander zu einer Vorform verbunden. Abschließend kann die Vorform optional zu einem Betonfertigteil 2 in einem Umformschritt 34 umgeformt werden.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar. Alle Offenbarungen in dieser Spezifikation sind im Hinblick auf alle Kategorien Vorrichtung, Verfahren, Computerprogramm zu verstehen, sodass beispielsweise mit der Beschreibung eines Verfahrensschritt auch eine entsprechende Vorrichtung offenbart ist, die Mittel zur Ausführung und/oder Steuerung des Verfahrensschritts umfasst, und eine entsprechende Vorrichtung, die dazu eingerichtet ist, den Verfahrensschritt zu steuern und/oder auszuführen.

**In** den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. **In** den Patentansprüchen angegebene Bezugszeichen sind nicht als Beschränkungen der eingesetzten Mittel und Schritte anzusehen.

### Bezugszeichenliste

| | |
|---|---|
| Betonfertigteil | 2 |
| Erste Schicht | 4 |
| Weitere Schicht | 5 |
| Oberfläche der ersten Schicht | 8 |
| Oberfläche der weiteren Schicht | 10 |
| Korrespondierende Struktur der ersten Schicht | 12 |
| Korrespondierende Struktur der weiteren Schicht | 14 |
| Bewehrungsfasern | 16 |
| Zusatzschicht | 18 |
| Längliche Oberflächen der Zusatzschicht | 20 und 22 |
| Freiräume | 24 |
| Bereitstellungsschritte | 26a und 26b |
| Walzschritte | 28a und 28b |
| Formungsschritte | 30a und 30b |
| Verbindungsschritt | 32 |
| Umformschritt | 34 |

## Patentansprüche

1. Betonfertigteil, insbesondere zur Verwendung als Strukturbauteil, zur Aufnahme von Lasten, umfassend:
- eine erste Schicht (4); und
- zumindest eine weitere Schicht (6);
- wobei die erste Schicht (4) und die zumindest eine weitere Schicht (6) faserverstärkten Beton umfassen;
**dadurch gekennzeichnet,**
- **dass** die erste Schicht (4) und die zumindest eine weitere Schicht (6) einander zugewandte und zueinander korrespondierende Oberflächen (8, 10) aufweisen.

2. Betonfertigteil nach Anspruch 1,
- wobei die erste Schicht (4) und die zumindest eine weitere Schicht (6) an ihren einander zugewandten Oberflächen (8, 10) zueinander korrespondierende Strukturen (12, 14) aufweisen,
- wobei die zueinander korrespondierenden Strukturen (12, 14) in Form, Größe, und/oder Anordnung aufeinander abgestimmt sind.

3. Betonfertigteil nach Anspruch 2,
- wobei die zueinander korrespondierenden Strukturen (12, 14) als zueinander korrespondierende Profilstrukturen, insbesondere als zueinander korrespondierende und verzahnte Profilstrukturen, ausgebildet sind.

4. Betonfertigteil nach Anspruch 2 oder 3,
- wobei die zueinander korrespondierenden Strukturen (12, 14) als zueinander korrespondierende, gewölbte Strukturen ausgebildet sind.

5. Betonfertigteil nach einem der Ansprüche 1 bis 4,
- wobei zwischen der ersten Schicht (4) und der zumindest einen weiteren Schicht (6) zumindest eine Isolierungsschicht (18), zumindest eine Haftvermittlerschicht (18) und/oder zumindest eine Bewehrungsschicht (18) angeordnet ist.

6. Betonfertigteil nach einem der Ansprüche 1 bis 5,
- wobei die erste Schicht (4) und/oder die zumindest eine weitere Schicht (6) eine Porosität in einem Bereich von weniger als 5%, insbesondere in einem Bereich von weniger als 3%, aufweist,
- wobei die erste Schicht (4) und/oder die zumindest eine weitere Schicht (8) im Wesentlichen frei von Makroporen ist.

7. Betonfertigteil nach einem der Ansprüche 1 bis 6,
- wobei die erste Schicht (4) und/oder die zumindest eine weitere Schicht (6) Bewehrungsfasern (16), insbesondere Carbonfasern, umfassen, und
- wobei die Bewehrungsfasern (16) der ersten Schicht (4) und/oder die Bewehrungsfasern (16) der zumindest einen weiteren Schicht (6) jeweils vorzugsweise im Wesentlichen unidirektional verlaufen.

8. Betonfertigteil nach Anspruch einem der Ansprüche 1 bis 7,
- wobei die erste Schicht (4) und/oder die zumindest eine weitere Schicht (6) Bewehrungsfasern (16), insbesondere Carbonfasern, umfassen, und
- wobei die Bewehrungsfasern (16) der ersten Schicht (4) im Wesentlichen orthogonal zu den Bewehrungsfasern (16) der zumindest einen weiteren Schicht (6) verlaufen.

9. Betonfertigteil nach Anspruch 7 oder 8,
- wobei die Bewehrungsfasern (16) der ersten Schicht (4) und/oder die Bewehrungsfasern (16) der zumindest einen weiteren Schicht (6) einen Durchmesser zwischen 2 µm und 10 µm, insbesondere zwischen 4 µm und 8 µm, aufweisen,
- wobei die Bewehrungsfasern (16) der ersten Schicht (4) und/oder die Bewehrungsfasern (16) der zumindest einen weiteren Schicht (6) eine mittlere Länge zwischen 0,5 mm bis 15 mm, insbesondere zwischen 1 mm und 10 mm, aufweisen, und/oder
- wobei die Bewehrungsfasern (16) der ersten Schicht (4) und/oder die Bewehrungsfasern (16) der zumindest einen weiteren Schicht (6) unterschiedliche Längen aufweisen, wobei die Längenverteilung der Bewehrungsfasern der ersten Schicht und/oder der zumindest einen weiteren Schicht zwischen 0,1 mm und 40 mm, insbesondere zwischen 0,2 mm und 30 mm, liegt.

10. Betonfertigteil nach einem der Ansprüche 1 bis 9,
- wobei das Betonfertigteil (2), insbesondere die erste Schicht (4) und/oder die zumindest eine weitere Schicht (6), umfasst:
- 40 bis 70 Gew.-% Zement;
- 5 bis 30 Gew.-% Zusatzstoffe;
- 1 bis 5 Gew.-% Bewehrungsfasern;
- 0,5 bis 4 Gew.-% Plastifizierer; und
- 1 bis 4 Gew.-% Retentionsmittel.

11. Verfahren zur Herstellung eines Betonfertigteils, insbesondere eines Betonfertigteils nach einem der Ansprüche 1 bis 10, wobei das Verfahren umfasst:
- Bereitstellen einer faserhaltigen, zementgebundenen Masse;
- Walzen der faserhaltigen, zementgebundenen Masse zu einer ersten Schicht;
- Walzen der zumindest faserhaltigen, zementgebundenen Masse zu zumindest einer weiteren Schicht;
- Formen der einen ersten Schicht und der zumindest einen weiteren Schicht derart, dass die erste Schicht und die zumindest eine weitere Schicht einander zugewandte und zueinander korrespondierende Oberflächen aufweisen;
- Verbinden der ersten geformten Schicht und der zumindest einen weiteren geformten Schicht zu einer Vorform;
- Optionales Umformen der Vorform zu einem Betonfertigteil.

12. Verfahren nach Anspruch 11,
- wobei vor Verbinden der ersten geformten Schicht und der zumindest einen weiteren Schicht Wasser, zumindest eine Suspension, insbesondere zumindest eine zementhaltige Suspension, und/oder eine Dispersion auf zumindest eine der einander zugewandten Oberflächen der ersten geformten Schicht und/oder der zumindest einen weiteren Schicht aufgebracht wird.

13. Verfahren nach einem der Ansprüche 11 oder 12,
- wobei die zueinander korrespondierenden Oberflächen der ersten Schicht und der zumindest einen weiteren Schicht während des Walzens eingebracht werden.

14. Verfahren nach einem der Ansprüche 11 bis 13,
- wobei vor Verbinden der ersten geformten Schicht und der zumindest einen weiteren Schicht eine Isolierungsschicht, eine Haftvermittlerschicht und/oder eine Bewehrungsschicht zwischen der ersten geformten Schicht und der zumindest einen weiteren Schicht angeordnet wird.

15. Verfahren nach einem der Ansprüche 11 bis 14,
- wobei die Vorform zu einem dreidimensionalen Betonfertigteil, insbesondere mittels Tiefziehen, Pressen und/oder Walzen umgeformt wird.
